(19) Europäisches Patentamt / European Patent Office / Office européen des brevets

(11) **EP 2 426 021 B1**

(12) **EUROPÄISCHE PATENTSCHRIFT**

(45) Veröffentlichungstag und Bekanntmachung des Hinweises auf die Patenterteilung:
**30.12.2015 Patentblatt 2015/53**

(51) Int Cl.:
**B60T 15/60** *(2006.01)*     **B60T 13/26** *(2006.01)*
**B60T 13/38** *(2006.01)*     **B60T 8/32** *(2006.01)*

(21) Anmeldenummer: **11179123.2**

(22) Anmeldetag: **29.08.2011**

(54) **Parkventil für einen Nutzfahrzeug-Anhänger**

Parking valve for a commercial vehicle trailer

Soupape de stationnement pour une remorque de véhicule utilitaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2010 DE 102010037349**

(43) Veröffentlichungstag der Anmeldung:
**07.03.2012 Patentblatt 2012/10**

(73) Patentinhaber: **Haldex Brake Products GmbH 69123 Heidelberg (DE)**

(72) Erfinder: **Sulzyc, Georg 68305 Mannheim (DE)**

(74) Vertreter: **REHBERG HÜPPE + PARTNER Patentanwälte PartG mbB Robert-Gernhardt-Platz 1 37073 Göttingen (DE)**

(56) Entgegenhaltungen:
**EP-B1- 1 188 634          EP-B1- 2 121 395
DE-A1-102007 053 764**

**Beschreibung**

## TECHNISCHES GEBIET DER ERFINDUNG

Die Erfindung betrifft ein Parkventil für einen Nutzfahrzeug-Anhänger. Ein derartiges Parkventil besitzt einen Ausgangsanschluss zur Druckbeaufschlagung einer Federspeicher-Feststellbremse oder Parkbremse, welche ohne Druckbeaufschlagung Betätigt durch eine Feder eine Feststellbremswirkung erzeugt und für hinreichende Druckbeaufschlagung des Ausgangsanschlusses gelöst ist. Weiterhin besitzt ein derartiges Parkventil einen Versorgungsanschluss zur Druckluftversorgung sowie eine Entlüftung oder einen Entlüftungsanschluss. Das Parkventil verfügt über ein manuelles Betätigungsorgan. Über dieses ist das Parkventil manuell umschaltbar zwischen einer Belüftungsstellung und einer Entlüftungsstellung. In der Belüftungsstellung ist der Ausgangsanschluss mit dem Versorgungsanschluss verbunden. Für hinreichende Druckluftbeaufschlagung des Versorgungsanschlusses ist in der Belüftungsstellung die Federspeicher-Feststellbremse oder Parkbremse gelöst, während in der Entlüftungsstellung der Ausgangsanschluss, der mit der Federspeicher-Feststellbremse oder Parkbremse verbunden ist, mit dem Entlüftungsanschluss verbunden ist, so dass die Federspeicher-Feststellbremse oder Parkbremse aktiviert ist.

## STAND DER TECHNIK

Herkömmliche Parkventile sind als einfache manuell betätigbare 3/2-Wegeventile ausgebildet und zwischen eine Druckluftquelle, einen Druckluftbehälter oder ein Anhängerbremsventil und eine Federspeicherbremskammer einer Federspeicher-Feststellbremse zwischengeordnet. Problematisch sind hierbei Betriebssituationen des Nutzfahrzeug-Anhängers, für welche im Fahrbetrieb betriebsbedingt der Druck an dem Versorgungsanschluss, beispielsweise infolge eines Druckverlusts in einem mit dem Versorgungsanschluss verbundenen Behälter des Nutzfahrzeug-Anhängers, abfällt, was in der Belüftungsstellung des Parkventils zur Folge hat, dass die Federspeicher-Feststellbremse ungewollt zumindest teilweise betätigt wird, womit eine Federspeicher-Bremswirkung erzeugt wird. Die genannten Druckabfälle am Versorgungsanschluss des Parkventils können bedingt sein durch wiederholte Bremsvorgänge, beispielsweise bei einer längeren Talabfahrt mit wiederholten Bremsvorgängen mit unzureichender Nachversorgung mit Druckluft, eine mittels EBS geregelte Notbremssituation mit wiederholter Be- und Entlüftung von Betriebsbremsen, schleichenden Druckluftverlusten bei abgestelltem Fahrzeug u. ä.

Andererseits stellt es sich als problematisch heraus, wenn ein von dem Nutzfahrzeug-Anhänger abgekoppeltes Fahrzeug zunächst über eine Betriebsbremse abgebremst ist, der Fahrer angesichts der zunächst vorliegenden Bremswirkung über die Betriebsbremse vergisst, das Parkventil in die Entlüftungsstellung zu überführen und dann infolge schleichender Druckluftverluste die Betriebsbremswirkung nachlässt, so dass sich der Anhänger ungewollt und unkontrolliert in Bewegung setzen kann.

EP 1 188 634 B1 betrifft eine Anhängerbremsanlage mit elektronischer Bremsregelung, bei welcher ein Anhängerbremsventil einerseits mit einer Bremssteuerleitung verbunden ist, welche über den Kupplungskopf Bremse mit einem Bremssteuerdruck von dem Zugfahrzeug versorgt wird, sowie andererseits über eine Vorratsleitung, die von einem Kupplungskopf Vorrat mit einem Vorratsdruck von dem Zugfahrzeug versorgt wird, mit in die Versorgungsleitung integriertem Löseventil verbunden ist. Ausgangsseitig ist das Anhängerbremsventil mit einem Vorratsbehälter verbunden. Ein weiterer Ausgang des Anhängerbremsventils ist unter Zwischenordnung eines Bremsdruckmodulators mit Betriebsbremszylindern von Betriebsbremsen, die den Fahrzeugrädern des Anhängers zugeordnet sind, verbunden. Ein weiterer Ausgang des Anhängerbremsventils ist über ein herkömmliches Parkventil in Ausbildung als 3/2-Wegeventil mit nachgeordnetem Wechselventil zur Vermeidung einer Bremskraftaddition der Bremskräfte an den Betriebsbremsen sowie der Federspeicher-Feststellbremse mit den Federspeicher-Feststellbremsen verbunden. Das Anhängerbremsventil ermöglicht eine Notbremsfunktion, für welche bei Abriss der Vorratsleitung über das Anhängerbremsventil eine Verbindung des Behälters sowohl mit dem zu dem Bremsdruckmodulator führenden Ausgang als auch zu dem zu dem Parkventil führenden Ausgang geschaffen wird, was eine Notbremsung mit geregelter Betriebsbremsung und Feststellbremsung zur Folge hat. In dem Anhängerbremsventil ist im normalen Fahrbetrieb der das Parkventil in seiner Belüftungsstellung speisende Ausgang über ein Rückschlagventil mit dem Behälter verbunden, so dass für ausreichenden Druck in dem Behälter über das Rückschlagventil und Parkventil die Lösekammern der Federspeicher-Feststellbremse mit einem hinreichenden Lösedruck beaufschlagt sind. Kommt es zu einem Druckabfall in dem Behälter, wird der Lösedruck in den Lösekammern der Federspeicher-Feststellbremsen gesichert über das Rückschlagventil. Für drucklose Vorratsleitung, sei es bei Abriss der Vorratsleitung oder sei es für ein Abkoppeln des Zugfahrzeugs, überbrückt das Anhängerbremsventil über eine automatisiert eingenommene Bypassstellung das Rückschlagventil, was zur Folge hat, dass der verringerte Behälterdruck auf die Lösekammern der Federspeicher-Feststellbremsen einwirkt. Auf diese Weise kann einerseits die Drucksicherung während des normalen Fahrbetriebs in den Lösekammern der Federspeicher-Feststellbremsen durch das Rückschlagventil erfolgen. Andererseits erfolgt eine Aufhebung der Drucksicherung bei Abkoppeln des Zugfahrzeugs und/oder in einer Notbremssituation, so dass die Federspeicher-Feststellbremsen zunehmend aktiviert werden können, wenn der Behälterdruck nicht mehr ausreichend ist, um die gewünschte Bremswirkung durch Einwirken auf die Betriebsbremsen herbeizuführen. Eine Umschaltung des Anhängerbremsventils kann erfolgen, wenn die Vorratsleitung drucklos ist und der Druck in dem Behälter oberhalb eines Schwellenwerts liegt, oder unabhängig von dem Druck im Behälter für drucklose Vorratsleitung erfolgen.

Auch US 3,837,361 offenbart die Verbindung der Kupplungsköpfe Vorrat und Bremse über ein Anhängerbremsventil und ein Relaisventil mit Betriebsbremsen, wobei optional mit einem Adapter-Einsatz über das Anhängerbremsventil die Lösekammern von Federspeicher-Feststellbremsen gespeist werden können. Bekannt ist, dass zur Ermöglichung einer Rangierfähigkeit der aus dieser Druckschrift bekannten Anhängerbremsanlage in die Vorratsleitung ein Löseventil und zwischen Anhängerbremsventil und die Lösekammern ein Parkventil integriert werden kann. Der die Speisung der Federspeicher-Feststellbremse ermöglichende Adapter-Einsatz verfügt über ein Rückschlagventil, welcher grundsätzlich eine Drucksicherung in den Lösekammern gegenüber Druckschwankungen in dem Behälter gewährleistet. Die Wirkung des Rückschlagventils wird aufgehoben, wenn der Behälterdruck einen frei konstruktiv vorgebbaren Schwellenwert unterschreitet, wobei der Schwellenwert mindestens so groß gewählt wird, dass für einen Behälterdruck unterhalb des Schwellenwerts in jedem Fall die gewünschte Bremswirkung garantiert werden kann, die sich dann u. U. aus einer Kombination der Bremswirkungen in den Betriebsbremsen und den Federspeicher-Feststellbremsen ergibt.

EP 0 792 783 B1 offenbart ein Parkventil, welches einen mit der Vorratsleitung verbundenen Anschluss, einen mit einem Behälter des Anhängers verbundenen Anschluss, einen Entlüftungsanschluss sowie einen mit Federspeicher-Feststellbremsen verbunden Anschluss besitzt. Das Parkventil ist in Schieber-Bauweise ausgebildet, wobei der Schieber eine Belüftungsstellung mit aktivierten Federspeicher-Feststellbremsen sowie eine Entlüftungsstellung mit gelösten Federspeicher-Feststellbremsen besitzt. Infolge einer Beaufschlagung durch eine Feder nimmt der Schieber grundsätzlich seine Entlüftungsstellung ein. Gegen die Federbeaufschlagung kann manuell das Parkventil in seine Belüftungsstellung überführt werden. Dem Schieber ist ein Kolben zugeordnet, dessen Kolbenfläche beaufschlagt ist mit dem Druck in der Vorratsleitung. Für hinreichenden Druck in der Vorratsleitung hält die an dem Kolben wirkende Kraft entgegen der Wirkung der Feder eine einmal manuell herbeigeführte Belüftungsstellung. Bei Einbruch des Drucks in der Vorratsleitung mit Abkoppeln des Zugfahrzeugs oder in einer Notbremssituation hat der Einbruch der auf den Kolben wirkenden Kraft zur Folge, dass die Feder automatisiert den Schieber in seine Entlüftungsstellung bringt, womit eine automatisierte Notbremsfunktion in das Parkventil integriert ist.

Auch DE 10 2007 053 764 offenbart den Einsatz eines Parkventils mit in das Parkventil integrierter Notbremsfunktion. Eine Drucksicherung kann hier über ein zwischen Anhängerbremsventil bzw. Behälter und Federspeicher-Feststellbremse integriertes, also dem Parkventil vor- oder nachgeordnetes, Rückschlagventil erfolgen, dessen Wirkung zunächst nicht aufhebbar ist. Die Druckschrift schlägt vor, eine Beaufschlagung der Federspeicher-Feststellbremsen über zwei Wechselventile vorzunehmen, welchen einerseits ein Steuerdruck einer Betriebsbremse und andererseits ein für die Federspeicher-Feststellbremse bestimmter Druck zugeführt wird. Die Druckschrift schlägt auch vor, eines der Wechselventile in das Parkventil zu integrieren. Weiterhin schlägt die Druckschrift vor, einen den Steuerkolben des Parkventils zur Gewährleistung der Notbrems-Funktion beaufschlagenden Anschluss des Parkventils über ein elektrisch ansteuerbares Magnetventil mit der Vorratsleitung zu verbinden. Bei Auswertung geeigneter Signale, beispielsweise der Raddrehzahlen, kann das Magnetventil den die Notbremsfunktion erzeugenden Steuerdruck freigeben, wenn anhand sich drehender Räder detektiert wird, dass eine echte Notbremssituation vorliegt, während der Steuerdruck nicht von dem Magnetventil freigegeben wird, wenn lediglich ein Abkoppeln des Anhängers erfolgt, aber keine Notbremssituation vorliegt (Raddrehzahl = 0). Die Druckschrift basiert auf dem Grundgedanken, sowohl das Anhängerbremsventil als auch das Parkventil automatisiert umzuschalten, sofern der Druck in der Vorratsleitung nicht mehr vorhanden ist. Hierbei werden geeignete Maßnahmen vorgeschlagen, um in einer reinen Parksituation mit Abkoppeln des Zugfahrzeugs die automatische Entlüftung der Federspeicher-Feststellbremse herbeizuführen, auch wenn der Fahrer vergisst, das Parkventil zu betätigen. Andererseits soll für eine echte Notbremssituation nicht über das Parkventil die zwingende Entlüftung der Federspeicher-Feststellbremse erfolgen, obwohl das Parkventil eine derartige Entlüftungsstellung einnimmt. Grund hierfür ist, dass die Entlüftung der Federspeicher-Feststellbremse keine geregelte Betriebsbremsung ermöglichen würde. Mit dem automatisierten Erkennen der echten Notbremssituation, sei es durch pneumatische Maßnahmen oder entsprechende CPU-basierte Erkennungsalgorithmen, wird somit die Funktion des Parkventils "überbrückt" oder wirkungslos gemacht. Dies erfolgt durch Einsatz einer Kombination von Wechselventilen und/oder elektrisch angesteuerten Magnetventilen.

DE 10 2005 019 479 B3 offenbart ein Anhängerbremsventil für einen Anhänger eines Nutzfahrzeugs, bei welchem in ein gemeinsames Gehäuse ein Löseventil, ein Parkventil, Luftfilter, ein Rückschlagventil, ein Notbremsventil, ein Überströmventil sowie ein manuell betätigbares Hebe-Senk-Ventil mit Reset-to-Ride-Funktion integriert ist.

Eine Integration eines Parkventils, Löseventils, Überströmventils, Überlassschutzventils sowie Notbremsventils in ein Hebe-Senk-Ventil ist aus EP 2 121 395 B1 bekannt.

DE 1 274 903 betrifft ein Parkventil für ein Zugfahrzeug, welches in einer Belüftungsstellung Federspeicher-Feststellbremsen löst. Der Lösedruck in der Federspeicher-Feststellbremse wird grundsätzlich gesichert durch ein Entlüftungsventil, welches zwischen der Federspeicher-Feststellbremse und dem Parkventil angeordnet ist. Sinkt allerdings, beispielsweise infolge einer intensiven wiederholten und zeitlich andauernden Betätigung der Betriebsbremsen der über das Parkventil dem Entlüftungsventil zugeführte Vorratsdruck unter einen Schwellwert, schaltet das Entlüftungsventil automatisch und dauerhaft um in eine Entlüftungsstellung, in welcher die Federspeicher-Feststellbremse entlüftet wird mit hierdurch eingeleiteter automatischer Bremsung des Zugfahrzeugs durch die Federspeicher-Feststellbremse.

## AUFGABE DER ERFINDUNG

Der vorliegenden Erfindung liegt die Aufgabe zugrunde, ein Parkventil mit erweiterten Funktionalitäten vorzuschlagen.

## LÖSUNG

Die Aufgabe der Erfindung wird erfindungsgemäß mit den Merkmalen des unabhängigen Patentanspruchs 1 gelöst. Weitere Ausgestaltungen der Erfindung ergeben sich entsprechend den abhängigen Patentansprüchen 2-14.

## BESCHREIBUNG DER ERFINDUNG

Während gemäß dem Stand der Technik Drucksicherungsventile außerhalb des Parkventils, beispielsweise in einem Anhängerbremsventil oder in einer Verbindungsleitung zwischen Anhängerbremsventil und Parkventil oder Parkventil und Federspeicher-Feststellbremse angeordnet ist, schlägt die Erfindung erstmals vor, ein Drucksicherungsventil in das Parkventil zu integrieren. Über das Drucksicherungsventil wird ein Druck an dem Ausgangsanschluss, also letztendlich in einer Lösekammer der Federspeicher-Feststellbremse, gegenüber einem Druckabfall an dem Versorgungsanschluss, insbesondere gegenüber einem Druckabfall in einem Behälter des Anhängers, gesichert. Hierdurch kann ein ungewolltes Betätigen der Parkbremse bei Druckluftschwankungen an dem Versorgungsanschluss vermieden werden.

Andererseits wird erfindungsgemäß die Wirkung des Drucksicherungsventils aufgehoben, wenn der Druck an dem Versorgungsanschluss oder die Druckdifferenz zwischen dem Druck am Versorgungsanschluss und dem Druck am Ausgangsanschluss einen Schwellenwert unterschreitet. Dies kann bspw. erfolgen, indem automatisiert über das Parkventil eine Verbindung zwischen dem Ausgangsanschluss und dem Entlüftungsanschluss geschaffen wird. Auf diese Weise kann für Abkoppeln des Anhängers und/oder in einer Notbremssituation, insbesondere mit einem Abriss der Vorratsleitung, zunächst ohne Aufhebung der Wirkung des Drucksicherungsventils eine reine Betriebsbremsung erfolgen, während mit Eintritt des genannten Kriteriums zur Aufhebung der Wirkung des Drucksicherungsventils ergänzend oder alleinig eine Bremswirkung durch die Federspeicher-Feststellbremse herbeigeführt werden kann.

Möglich ist, dass mit Aufhebung der Wirkung des Drucksicherungsventils der Ausgangsanschluss mit dem Versorgungsanschluss pneumatisch verbunden wird, so dass beispielsweise Veränderungen des Behälterdrucks an die Federspeicher-Feststellbremse weitergegeben werden, so dass je nach Druck in dem Behälter eine unterschiedliche Bremswirkung der Federspeicher-Feststellbremse erzielt wird.

Ebenfalls möglich ist allerdings, dass mit Aufhebung der Wirkung des Drucksicherungsventils eine pneumatische Verbindung des Ausgangsanschlusses mit dem Entlüftungsanschluss erfolgt, womit eine Vollbremsung durch Betätigung der Federspeicher-Feststellbremsen herbeigeführt werden kann.

Das erfindungsgemäße Parkventil kann in beliebige Bremsanlagen integriert werden. Möglich ist, dass ein Anhängerbremsventil, welches ohne ein Drucksicherungsventil ausgestattet ist, in hohen Stückzahlen gefertigt und vertrieben wird und je nach Anforderungsprofil in dem Anhänger dann mit einem erfindungsgemäßen Parkventil mit Drucksicherungsventil oder aber einem herkömmlichen Parkventil ohne Drucksicherungsventil kombiniert wird.

Die konstruktive Ausgestaltung des Drucksicherungsventils und die Aufhebung der Wirkung desselben ist beliebig mit vielfältigen, dem Fachmann an sich bekannten Möglichkeiten. Hierbei kann eine Beeinflussung der Stellung des Drucksicherungsventils und der Aufhebung der Wirkung durch pneumatische Steuerung, elektromagnetische Vorsteuerung oder rein elektromagnetische Steuerung erfolgen. Für eine besondere Ausgestaltung der Erfindung ist das Drucksicherungsventil mit einem Ventilkörper ausgebildet. Der Ventilkörper besitzt auf einer Seite eine Fläche, die mit dem Druck des Versorgungsanschlusses beaufschlagt ist. Die andere Seite des Ventilkörpers besitzt eine Fläche, die mit dem Druck des Ausgangsanschlusses beaufschlagt ist. Damit bildet der Ventilkörper eine Art Differenzkolben, dessen resultierende Betätigungskraft abhängig ist von der Druckdifferenz an dem Versorgungsanschluss sowie dem Ausgangsanschluss. Möglich ist, dass eine weitere Beeinflussung der Kraftverhältnisse an dem Ventilkörper und damit der Stellung desselben erfolgt durch mindestens eine auf den Ventilkörper einwirkende Feder oder andere Maßnahmen.

Eine verbesserte Anpassbarkeit der Abhängigkeit des Schwellenwerts für die Aufhebung der Wirkung des Drucksicherungsventils kann herbeigeführt werden, wenn gemäß einer weiteren Ausgestaltung der Erfindung die beiden genannten Flächen unterschiedlich sind. Vorzugsweise ist die Fläche, die mit dem Druck des Versorgungsanschlusses beaufschlagt ist, größer als die Fläche, die mit dem Druck des Ausgangsanschlusses beaufschlagt ist. Die größere, mit dem Druck des Versorgungsanschlusses beaufschlagte Fläche kann eine Kraft erzeugen, welche in Richtung der gesicherten Stellung des Drucksicherungsventils wirkt. Schwankt der Druck an dem Versorgungsanschluss, wird angesichts der genannten Flächenverhältnisse das Drucksicherungsventil zunächst weiterhin in seiner sichernden Stellung gehalten, da der größere Druck an dem Ausgangsanschluss an der kleineren Fläche wirkt. Durch die Dimensionierung der Flächenverhältnisse kann somit Einfluss auf den genannten Schwellenwert genommen werden. Möglich ist, dass der Schwellenwert allein durch die Flächenverhältnisse vorgegeben ist. Ebenfalls möglich ist, dass ergänzende Maßnahmen zur Vorgabe des Schwellenwerts getroffen sind, beispielsweise eine ergänzende Feder zum Einsatz kommt oder eine Reibverbindung oder eine Rast- oder Sperreinrichtung eingesetzt wird.

In weiterer Ausgestaltung ist das Drucksicherungsventil als Membranventil mit Überströmmanschette ausgebildet, wobei die Überströmmanschette bei anliegendem Druck an dem Versorgungsanschluss ein Überströmen von Druckluft in Richtung der Federspeicher-Feststellbremse ermöglicht, aber eine entgegengesetzte Strömung unterbindet.

Durchaus möglich ist, dass in dem erfindungsgemäßen Parkventil ausschließlich ein Ventilelement, ein Membranventil, ein Steuerkolben o. ä. eingesetzt ist, wobei die beteiligten Bauelemente dann den Schwellenwert für die Aufhebung der Wirkung des Drucksicherungsventils vorgeben. Allerdings können auch erweiterte Möglichkeiten, u. U. für die Beeinflussung des Schwellenwerts und die Abhängigkeit der Aufhebung der Wirkung des Rückschlagventils sowie die Beeinflussung der Bauraumverhältnisse, wünschenswert sein. In einem derartigen Fall schlägt die Erfindung vor, dass in dem Parkventil ein Steuerraum vorgesehen ist, der über einen Steueranschluss druckbeaufschlagbar ist. In dem Steuerraum ist ein Steuerkolben angeordnet. Erfindungsgemäß beeinflusst der Steuerkolben (direkt oder indirekt) die Kraftverhältnisse an dem Drucksicherungsventil. Somit kann je nach Druckbeaufschlagung des Steueranschlusses der Schwellenwert für die Aufhebung der Wirkung des Drucksicherungsventils beeinflusst werden.

Für die Druckluftbeaufschlagung des Steueranschlusses gibt es vielfältige Möglichkeiten:

Für eine erfindungsgemäße Ausgestaltung wird der Steueranschluss mit dem Druck beaufschlagt, mit dem auch der Versorgungsanschluss beaufschlagt wird. Für diese Ausgestaltung können der Steueranschluss und der Versorgungsanschluss separat ausgebildet sein, aber von parallelen Leitungszweigen mit demselben Druckniveau beaufschlagt werden. Möglich ist auch, dass der Steueranschluss und der Versorgungsanschluss als ein einziger, baulich vereinigter Anschluss ausgebildet sind. In diesem Fall verzweigt dann von dem baulich vereinigten einzigen Anschluss innerhalb des Parkventils die Leitung einerseits zu dem Drucksicherungsventil und andererseits zu dem Steuerraum. Die Beaufschlagung sowohl des Steuerkolbens als auch des Drucksicherungsventils mit demselben Druck hat zur Folge, dass eine Art "Verstärkung" der Druckwirkung auftritt, da eine Druckerhöhung an dem einzigen Anschluss oder dem Steueranschluss und dem Versorgungsanschluss sowohl eine Kraftveränderung an dem Steuerkolben als auch an dem Drucksicherungsventil hervorruft. Werden die beiden Kraftveränderungen überlagert, kann u. U. eine besonders feinfühlige Vorgabe des Schwellenwerts erfolgen. Weiterhin kann die Bauraumgestaltung u. U. optimiert oder variabler gestaltet werden, da die gewünschten Kräfte nicht mit einer einzigen von dem Druck an dem Versorgungsanschluss beaufschlagten Fläche erzielt werden muss, sondern hierzu zwei u. U. kleinere Flächen eingesetzt werden, die somit beispielsweise einen kleinen Durchmesser besitzen können und beliebig, beispielsweise axial hintereinanderliegend, angeordnet werden können. Ebenfalls möglich ist, dass durch die überlagerten Wirkungen des Steuerkolbens sowie des Ventilkörpers veränderte Betätigungscharakteristika, insbesondere eine nichtlineare Betätigungscharakteristik, ermöglicht werden.

Für eine Kopplung des Steuerkolbens mit dem Drucksicherungsventil gibt es vielfältige Möglichkeiten. Um lediglich einige Möglichkeiten zu nennen, kann eine Kopplung über einen HebelMechanismus oder getrieblichen Mechanismus, eine Langloch-Verbindung oder einen Stößel erfolgen. Hierbei kann die Kopplung ständig bestehen. In einer Weiterbildung der Erfindung beeinflusst der Steuerkolben nur für einen Teilbetriebsbereich die Kraftverhältnisse an dem Drucksicherungsventil. Beispielhaft wird dies anhand einer Kopplung über einen mit dem Steuerkolben verbundenen Stößel erläutert: Dieser kann für einen Teilhub beabstandet von einer Kontaktfläche des Drucksicherungsventils angeordnet sein, während dieser für den anderen Teilhub zur Anlage an die Kontaktfläche des Drucksicherungsventils kommt, womit die Übertragung von Kräften durch den Stößel von dem Steuerkolben zu dem Drucksicherungsventil ermöglicht ist.

Darüber hinaus schlägt die Erfindung vor, dass der Vorsorgungsanschluss mit einem für die Federspeicher-Feststellbremse bestimmten Anschluss des Anhängerbremsventils verbunden ist, während der Steueranschluss mit dem Behälter des Anhängers gekoppelt ist. Möglich ist hierbei, dass zwischen Versorgungsanschluss und Anhängerbremsventil ein Rückschlagventil zwischengeordnet ist.

Für eine alternative Anschlussmöglichkeit ist bei dem erfindungsgemäßen Parkventil der Versorgungsanschluss mit dem Anhängerbremsventil verbunden, während der Steueranschluss mit einer Vorratsleitung des Anhängers gekoppelt ist. Dies ermöglicht vielfältige unterschiedliche Betriebszustände des Parkventils:

- Für abgekoppelten Anhänger ist die Vorratsleitung drucklos, was zur Folge hat, dass der Steuerkolben nicht druckbeaufschlagt ist. Die hierdurch entfallende, auf das Drucksicherungsventil einwirkende Kraft kann zur Folge haben, dass die Federspeicher-Feststellbremse automatisiert entlüftet wird, so dass mit Abkoppeln des Zugfahrzeugs automatisch die Parkbremse des Anhängers aktiviert wird.

- Kommt es während der Fahrt zu Schwankungen des Drucks in einem Behälter des Anhängers, kann bei geeigneter Dimensionierung dennoch die Drucksicherungsfunktion des Drucksicherheitsventils gewährleistet sein.

- Weiterhin gewährleistet die erfindungsgemäße Ausgestaltung, dass mit einem Abriss der Vorratsleitung oder einer anderweitigen Notbremssituation die Druckluftbeaufschlagung des Steuerkolbens einbricht, so dass auch für die Notbremssituation automatisiert eine Entlüftung der Federspeicher-Feststellbremse erfolgen kann.

- Möglich ist, dass für eine derartige Ausgestaltungsform das Anhängerbremsventil signifikant vereinfacht wird. Dieses kann u. U. vollständig entfallen oder durch ein reines Relaisventil ersetzt werden. In diesem Fall ist es auch möglich, dass der Versorgungsanschluss mit dem Behälter gekoppelt ist.

Hinsichtlich der grundsätzlichen Ausbildung des Drucksicherungsventils gibt es vielfältige Möglichkeiten. Dieses kann beispielsweise als Sitzventil ausgebildet sein. In weiterer Ausgestaltung der Erfindung wird jedoch vorgeschlagen, dass das Drucksicherungsventil mit einem Schieberventil gebildet ist. Hierbei besitzt dieses ein Schiebergehäuse, welches in einem Gehäuse des Parkventils verschieblich geführt ist. Weiterhin ist ein Ventilschieber vorgesehen, der wiederum bewegbar in dem Schiebergehäuse geführt ist. Das Schieberventil ist durch eine Relativbewegung zwischen dem Schiebergehäuse und dem Ventilschieber in die Belüftungsstellung und die Entlüftungsstellung überführbar. Die Relativbewegung des Schiebergehäuses und des Ventilschiebers kann auf zwei Weisen verursacht werden, nämlich sowohl manuell durch das Betätigungsorgan als auch abhängig von den Druckverhältnissen an dem Versorgungsanschluss und/oder dem Steueranschluss.

Möglich ist, dass die Beeinflussung der Kraftverhältnisse für die Ausbildung des Drucksicherungsventils mit einem Schieberventil auch durch eine Reib-, Rast- oder Sperreinrichtung erfolgt. Über die Reib-, Rast- oder Sperreinrichtung ist mindestens eine Stellung oder ein Stellungsbereich des Schiebergehäuses, des Ventilschiebers und/oder des Schieberventils sicherbar. Möglich ist, dass für diese Ausgestaltung eine Stellung oder ein Stellungsbereich erst verlassen wird, wenn die sonstigen auf das Schieberventil einwirkenden Kräfte ein vorgegebenes Kraftniveau überschreiten. Ebenfalls möglich ist, dass die Reib-, Rast- oder Sperreinrichtung durch zusätzliche Maßnahmen wie eine elektrische oder elektropneumatische Steuerung außer Wirkung gebracht wird, also schaltbar ist oder entrastet oder entriegelt wird.

Vorzugsweise wird die Wirkung des Drucksicherungsventils, nämlich die Sicherung gegenüber einem Druckabfall an dem Versorgungsanschluss, wiederhergestellt, wenn der Druck an dem Versorgungsanschluss oder die Druckdifferenz zwischen dem Druck am Versorgungsanschluss und dem Druck am Ausgangsanschluss einen Schwellenwert überschreitet.

Kommt es infolge einer längeren Bremstätigkeit bei abschüssiger Bahn zu einem Abfall des Drucks in den Druckluftbehältern, hätte dies gemäß DE 1 274 903 eine automatisiert eingeleitete Entlüftung der Federspeicherbremse zur Folge mit einem schnellen, unmittelbaren vollständigen Anlegen der Federspeicherbremsen. Gleichzeitig würde durch eine Feder das Parkventil aus der Belüftungsstellung automatisch in die Entlüftungsstellung überführt. Im Gegensatz zu dieser bekannten Ausführungsform kann erfindungsgemäß die Umschaltung des Drucksicherungsventils erfolgen, ohne dass die Grundstellung des Parkventils verändert wird, sodass das Betätigungsorgan weiterhin in der Belüftungsstellung verbleibt. Dies hat zur Folge, dass mit einem Wiederanstieg des Drucks an dem Versorgungsanschluss das Parkventil nicht gemäß dem Stand der Technik manuell betätigt werden muss, sondern das Drucksicherungsventil automatisch wieder seine Belüftungsstellung einnimmt, womit die Federspeicherbremse wieder gelöst ist. Dies ist insbesondere von Vorteil bei einem lediglich kurzzeitigen Druckeinbruch in einem Druckluftbehälter - beispielsweise kann dieser nur zu einer kurzzeitigen Betätigung der Federspeicherbremse führen, ohne dass zwingend eine Vollbremsung bis zum Stillstand erfolgen muss, wobei nach dieser kurzzeitigen, unter Umständen lediglich teilweisen Betätigung der Federspeicherbremse, die Fahrt fortgesetzt werden kann. Auch bei einer Vollbremsung wäre mit Bereitstellung ausreichenden Drucks an dem Versorgungsanschluss oder ausreichender Druckdifferenz das Fahrzeug ohne manuelle Betätigung des Parkventils wieder fahrbereit. Trägt das Drucksicherungsventil dafür Sorge, dass sich ein Druck in den Federspeicherbremskammern einstellt, welcher korreliert mit einem Druck in einem Druckluftbehälter, so ist auch eine abgestufte Bremsung über die Federspeicherbremse ermöglicht.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden.

Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

## KURZBESCHREIBUNG DER FIGUREN

Im Folgenden wird die Erfindung anhand in den Figuren dargestellter bevorzugter Ausführungsbeispiele weiter erläutert und beschrieben.

**Fig. 1**   zeigt schematisch eine Anhängerbremsanlage mit einem erfindungsgemäßen Parkventil.

**Fig. 2**   zeigt die sich für das Parkventil gemäß Fig. 1 ergebende Abhängigkeit des Drucks an einem Ausgangsanschluss des Parkventils von dem Druck an einem Versorgungsanschluss.

**Fig. 3**   zeigt schematisch eine Anhängerbremsanlage mit einem abgewandelten erfindungsgemäßen Parkventil.

**Fig. 4**   zeigt die sich für das Parkventil gemäß Fig. 3 ergebende Abhängigkeit des Drucks an einem Ausgangsanschluss des Parkventils von dem Druck an einem Versorgungsanschluss.

**Fig. 5**   zeigt schematisch eine Anhängerbremsanlage mit einem abgewandelten erfindungsgemäßen Parkventil.

**Fig. 6**   zeigt schematisch eine Anhängerbremsanlage mit einem abgewandelten erfindungsgemäßen Parkventil.

**Fig. 7**   zeigt eine schematische Anhängerbremsanlage mit einem abgewandelten erfindungsgemäßen Parkventil.

**Fig. 8**   zeigt die sich für das Parkventil gemäß Fig. 7 ergebende Abhängigkeit des Drucks an einem Ausgangsanschluss des Parkventils von dem Druck an einem Versorgungsanschluss und Steueranschluss.

**Fig. 9**   zeigt schematisch eine Anhängerbremsanlage mit einem abgewandelten erfindungsgemäßen Parkventil.

**Fig. 10**   zeigt schematisch eine Anhängerbremsanlage mit einem Parkventil mit vorgeordnetem Magnetventil zur Drucksicherung.

## FIGURENBESCHREIBUNG

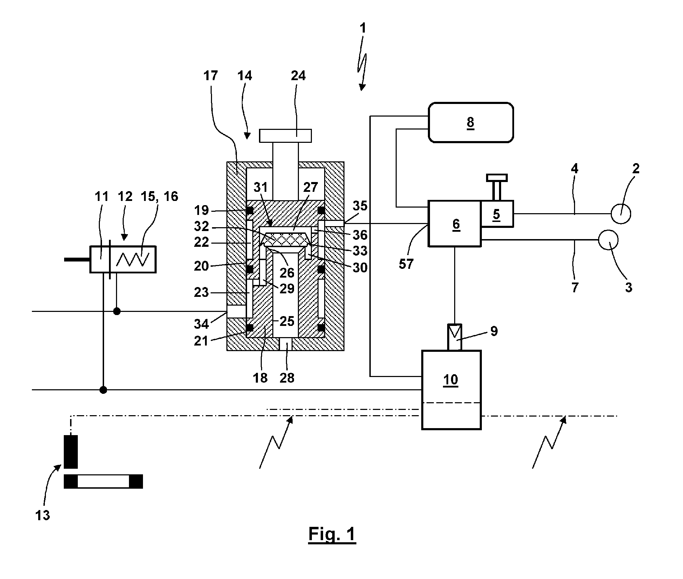

**Fig. 1** zeigt eine Anhängerbremsanlage 1, welche von einem nicht dargestellten Zugfahrzeug über einen Kupplungskopf Vorrat 2 mit einem Vorratsdruck sowie über einen Kupplungskopf Bremse 3 mit einem Bremssteuerdruck versorgt wird. Der Kupplungskopf Vorrat 2 ist in an sich bekannter Weise über eine Vorratsleitung 4 und ein in diese integriertes Löseventil 5 mit einem Anhängerbremsventil 6 verbunden. Entsprechend ist der Kupplungskopf Bremse 3 über eine Bremssteuerleitung 7 mit dem Anhängerbremsventil 6 pneumatisch verbunden. Das Anhängerbremsventil 6 ist mit einem Behälter 8 verbunden, wobei das Anhängerbremsventil 6 die Befüllung des Behälters 8 aus der Vorratsleitung 4 ermöglicht und der Behälter 8 umgekehrt eine Druckluftversorgung des Anhängerbremsventils 6 auch bei Einbruch des Drucks in der Vorratsleitung 4 ermöglicht. Das Anhängerbremsventil 6 erzeugt unter Berücksichtigung des Drucks in der Bremssteuerleitung 7 einen Bremssteuerdruck, ggf. unter Ausführung einer Relaisfunktion, welcher einem Steueranschluss des EBS-Steuergeräts 10 zugeführt wird. Das EBS-Steuergerät 10 wird ebenfalls aus dem Behälter 8 mit Druckluft versorgt. Das EBS-Steuergerät 10 erzeugt einen pneumatischen Ausgangsdruck, welcher einer Betriebsbremskammer 11 mindestens eines Kombi-Bremszylinders 12 zugeführt wird. Wie dargestellt besitzt das EBS-Steuergerät 10 einen pneumatischen Teil sowie einen elektrischen Teil mit einer Steuereinheit, welchem elektrischen Signale, insbesondere Signale von Raddrehzahlsensoren 13, zugeführt werden. Ein Ausgang 14 des Anhängerbremsventils 6 speist, beispielsweise entsprechend der Ausführungsformen gemäß DE 10 2007 053 764 B4, EP 1 188 634 B1 oder US 3,837,361, über ein Parkventil 14 Lösekammern 15 von Federspeicher-Feststellbremsen 16, die für das vorliegende Ausführungsbeispiel integraler Bestandteil der Kombi-Bremszylinder 12 sind.
Das Parkventil 14 verfügt über ein Gehäuse 17, in welchem ein Ventilschieber 18 verschieblich geführt ist zwischen einer Belüftungsstellung, welche in Fig. 1 wirksam ist, sowie einer Entlüftungsstellung, die in Fig. 1 oberhalb der Belüftungsstellung angeordnet ist. Der Ventilschieber 18 besitzt in an sich bekannter Weise drei Steuerkanten 19, 20, 21, die für das dargestellte Ausführungsbeispiel mit Ringnuten und darin angeordneten Dichtringen ausgebildet sind. Zwischen den Steuerkanten 19, 20 ist eine Ringkammer 22 gebildet, während zwischen den Steuerkanten 20, 21 eine Ringkammer 23 gebildet ist. Der Ventilschieber 18 ist mit einem aus dem Gehäuse 17 auskragenden Betätigungsorgan 24 gekoppelt oder integral mit diesem ausgebildet. In dem Ventilschieber 18 ist auf der dem Betätigungsorgan 24 gegenüberliegenden Seite eine Längsbohrung 25 vorgesehen, die über einen Ventilsitz 26 in einen Druckraum 27 übergeht. Die Längsbohrung 25 ist unabhängig von der Stellung des Ventilschiebers 18 ständig mit einer Entlüftung 28 verbunden. Die Ringkammer 23 steht über einen Verbindungskanal 29 in ständiger Verbindung mit einer in Richtung Druckraum 27 grundsätzlich offenen, aber von dem Ventilschieber 18 begrenzten Ringkammer 30. Ein Drucksicherungsventil 31 ist mit einem Ventilkörper 32 gebildet. In der in Fig. 1 wirksamen Stellung des Ventilkörpers 32 verschließt dieser unter Abdichtung den Ventilsitz 26, so dass ein Übertritt von Druckluft aus dem Druckraum 27 und dem Ringraum 30 zu der Entlüftung 28 unterbunden ist. Der Ventilkörper 32 verfügt über eine Überströmlippe 33, welche gegen die den Druckraum 27 begrenzende Wandung gepresst ist und ein Überströmen von Druckluft von dem Druckraum 27 zu dem Ringraum 30 ermöglicht. Der Ventilkörper 32 gewährleistet somit neben der Wechselwirkung mit dem Ventilsitz 26 die Abdichtung des Druckraums 27.

Das Parkventil 14 besitzt einen Ausgangsanschluss 34, welcher in der in Fig. 1 wirksamen Belüftungsstellung mit der Ringkammer 23 verbunden ist, während mit einer Bewegung in die Entlüftungsstellung die Steuerkante 21 den dem Ausgangsanschluss 34 zugeordneten Kanal überfährt, womit der Ausgangsanschluss 34 mit der Entlüftung 28 verbunden wird. Weiterhin besitzt das Parkventil 14 einen Versorgungsanschluss 35, der unabhängig von der Stellung des Ventilschiebers 18 ständig mit der Ringkammer 22 verbunden ist.

Die Funktionsweise des in Fig. 1 dargestellten Parkventils 14 ist wie folgt:

Für geparkten Anhänger befindet sich das Parkventil 14 in der in Fig. 1 nicht dargestellten Entlüftungsstellung.

Mit Ankoppeln des Anhängers an das Zugfahrzeug muss der Fahrer das Parkventil 14 durch manuelle Betätigung des Betätigungsorgans 24 in die in Fig. 1 wirksame Belüftungsstellung überführen. Stellt das Anhängerbremsventil 6 Druckluft für den Versorgungsanschluss 35 bereit, gelangt diese über die Ringkammer 22, einen Verbindungskanal 36, Druckraum 27, Überströmlippe 33, Ringkammer 30, Verbindungskanal 29, Ringkammer 23 und den Ausgangsanschluss 34 zu der Lösekammer 15, womit die Federspeicher-Feststellbremse 16 mit hinreichendem Druckanstieg gelöst wird.

Fällt während des Betriebs der Anhängerbremsanlage 1 der Druck an dem Versorgungsanschluss 35, insbesondere durch Abfall des Drucks in dem Behälter 8, ab, sperrt die Überströmlippe 33 den Druck in der Lösekammer 15 ein, so dass das ungewollte Eintreten einer Federspeicher-Bremswirkung infolge der Druckschwankungen unterbunden ist. Fällt der Druck an dem Versorgungsanschluss 35 allerdings unterhalb eines Schwellenwerts, wird die auf der Oberseite des Ventilkörpers 32 wirkende Kraft, welche den Ventilkörper 32 gegen den Ventilsitz 26 presst, kleiner als die Kraft, welche in der Ringkammer 30 auf den Ventilkörper wirkt. Mit Unterschreiten dieses Schwellenwerts entsteht ein Übertrittsquerschnitt zwischen dem Ventilkörper 32 und dem Ventilsitz 26, so dass die Lösekammer 15 über den Ausgangsanschluss 34, die Ringkammer 23, den Verbindungskanal 29, die Ringkammer 30, den Übertrittsquerschnitt und die Längsbohrung 25 zu der Entlüftung 28 gelangen kann, womit dann eine gesteuerte Entlüftung erfolgen kann je nachdem, wie groß der Druck an dem Versorgungsanschluss 35 ist. Der Schwellenwert des Drucks, für welchen sich der Ventilkörper 32 von dem Ventilsitz 26 löst, ergibt sich über die Gleichung

$$p_{Anschluss\ 34} \times A_{Ringkammer\ 30} = p_{Anschluss\ 35} \times A_{Druckraum\ 27}.$$

Es versteht sich, dass eine ergänzende Beeinflussung des Schwellenwerts erfolgen kann, wenn der Ventilkörper 32 zusätzlich durch mindestens eine Feder oder andere, beispielsweise aktiv gesteuerte Bauelemente, beaufschlagt ist.

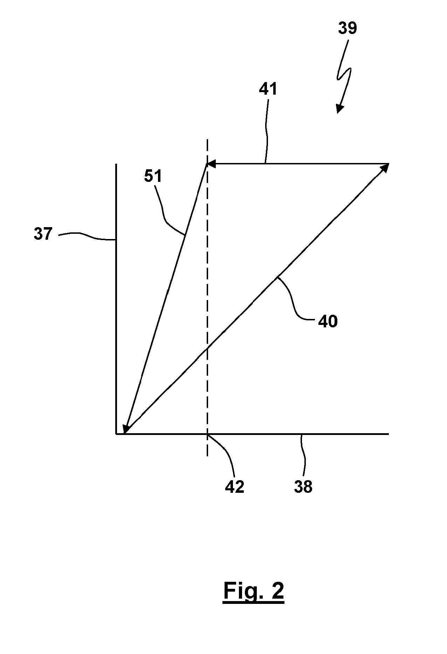

Fig. 2 zeigt die Abhängigkeit des Drucks 37 an dem Ausgangsanschluss 34 von dem Druck 38 an dem Versorgungsanschluss 35 in Form eines Hystereseverlaufs 39. Für die Befüllung der Lösekammer 15 mit einem Druckanstieg an dem Versorgungsanschluss 35 ergibt sich eine lineare Abhängigkeit in einem Betriebsbereich 40. Dass die Befüllung erst mit einem gewissen Offset gegenüber dem Koordinatenursprung erfolgt, hängt ab von der Öffnungscharakteristik der Überströmlippe 33. Auf die genannte Weise erfolgt eine Befüllung in dem Betriebsbereich 40 bis zum Lösedruck oder maximalen Druck in der Lösekammer 15. Fällt im Folgenden in dem Betriebsbereich 41 der Druck 38 ab, sichert das Drucksicherungsventil 31 den Druck in der Lösekammer 15, so dass der Druck 37 in dem Betriebsbereich 41 konstant bleibt. Unterschreitet der Druck 38 den Schwellenwert 42 für die Schaffung des Übertrittsquerschnitts zwischen Ventilkörper 32 und Ventilsitz 26, fällt in einem Betriebsbereich 51 der Druck 37 linear ab mit einer Verringerung des Drucks 38. Hierbei ergibt sich in dem Betriebsbereich 51 eine größere Steigung des Hystereseverlaufs 39 als für den Betriebsbereich 40, was durch die Flächenverhältnisse, auf welche die Drücke 37, 38 einwirken, bedingt ist. Der Ventilkörper 32 stellt für das in Fig.1 dargestellte Ausführungsbeispiel einen Differenzialkolben dar.

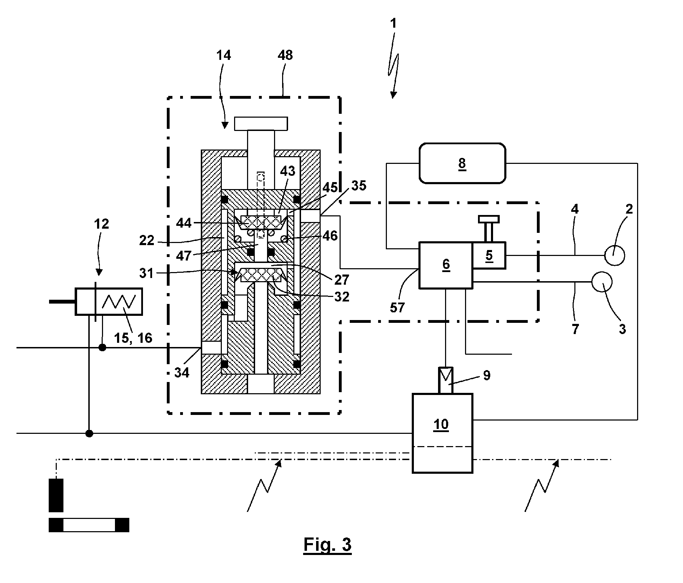

Fig. 3 zeigt eine abgewandelte Ausführungsform des Parkventils 14, bei der im Inneren des Ventilschiebers 18 ein zusätzlicher Steuerraum 44 mit darin unter Abdichtung geführtem Steuerkolben 45 angeordnet ist. Der Steuerraum 44 ist über einen Verbindungskanal 45 mit der Ringkammer 22 verbunden, so dass dieser von dem an dem Versorgungsanschluss 35 anliegenden Druck beaufschlagt ist. Der Steuerkolben 44 ist je nach Druckbeaufschlagung des Steuerraums 43 unter Beaufschlagung einer u. U. vorgespannten Druckfeder 46 in Richtung des Drucksicherungsventils 31 verschiebbar. Auf der dem Druckraum 43 abgewandten Seite ist an den Steuerkolben 44 ein Stößel 47 angekoppelt, welcher unter Abdichtung durch eine Querwandung des Gehäuses 17 geführt ist. In der in Fig. 3 dargestellten Stellung besitzt der Stößel 47 einen Abstand von einer zugeordneten Kontaktfläche auf der Oberseite des Ventilkörpers 32. Mit erhöhter Druckbeaufschlagung des Versorgungsanschlusses 35 bewegt sich der Steuerkolben 44 unter zusätzlicher Beaufschlagung der Druckfeder 46 nach unten, womit der Stößel 47 zur Anlage an die Kontaktfläche des Ventilkörpers 32 kommt. Somit kann für das Überschreiten eines Schwellwertes des Druck an dem Steueranschluss 35 über den Steuerkolben 44 eine von dem Druck am Steueranschluss 35 abhängige Kraftkomponente auf den Ventilkörper 32 aufgebracht werden, die diesen gegen den Ventilsitz 26 presst.

Grundsätzlich kann für sämtliche hier dargestellten und beschriebenen Ausführungsformen das Parkventil 14 als singuläre Baueinheit ausgebildet sein, welche über pneumatische Leitungen mit benachbarten Bauelementen verbunden ist. Ebenfalls möglich ist, dass in das Parkventil 14 ergänzende, hier nicht näher angesprochene Funktionen integriert sind. Weiterhin möglich ist, dass das Parkventil 14 mit weiteren Bauelementen eine Baueinheit bildet, wobei auch möglich ist, dass diese Baueinheit modular derart ausgebildet ist, dass je nach Anforderungen eines Anhängers einzelne Bauelemente ergänzt oder weggelassen werden können. Fig. 3 zeigt eine Ausgestaltung, bei welcher in einer Baueinheit 48, vorzugsweise einem gemeinsamen Gehäuse das Parkventil 14, das Anhängerbremsventil 6 und das Löseventil 5 angeordnet sind. Möglich ist selbstverständlich auch, dass die genannten Bauelemente aneinander angeflanscht sind. Bei den hier dargestellten Ausführungsformen wird dem Parkventil 14 der dem Kupplungskopf Bremse 3 entstammende Bremssteuerdruck nicht zugeführt.

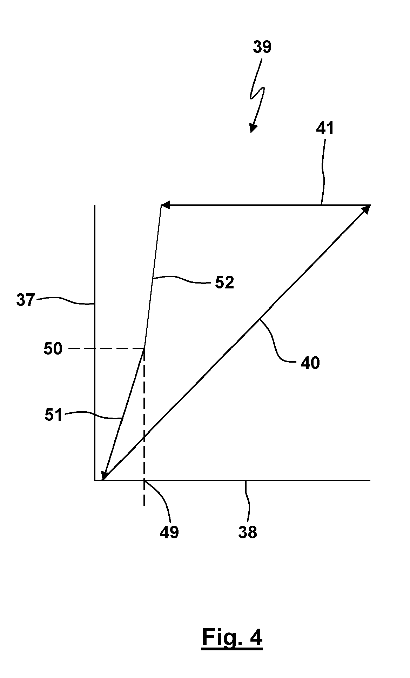

Fig. 4 zeigt den Hystereseverlauf 39 des Parkventils 14 gemäß Fig. 3: Hierbei sind die Verläufe in dem Betriebsbereichen 40, 41 im Wesentlichen entsprechend Fig. 2 ausgebildet. Fällt der Druck 38 an dem Versorgungsanschluss 35 unter einen Schwellenwert 49, löst sich der Stößel 47 von dem Ventilkörper 32, was zur Folge hat, dass die Schaffung des Übertrittsquerschnitts zwischen dem Ventilkörper 32 und dem Ventilsitz 26 lediglich von den Druckverhältnissen an dem Ventilkörper 32 abhängig ist. Der Druck 37 an dem Ausgangsanschluss 34 wird durch Schaffung des Übertrittsquerschnitts abgesenkt auf einen Druckwert 50, von wo an dann mit weiterer Verringerung des Drucks 38 der Druck 37 in dem Betriebsbereich 51 linear sinkt. Je nach Dimensionierung des Querschnitts des Steuerkolbens 44 und der Steifigkeit der Druckfeder 46 kann die Steilheit des Abfalls des Drucks in dem Betriebsbereich 52 beeinflusst werden.

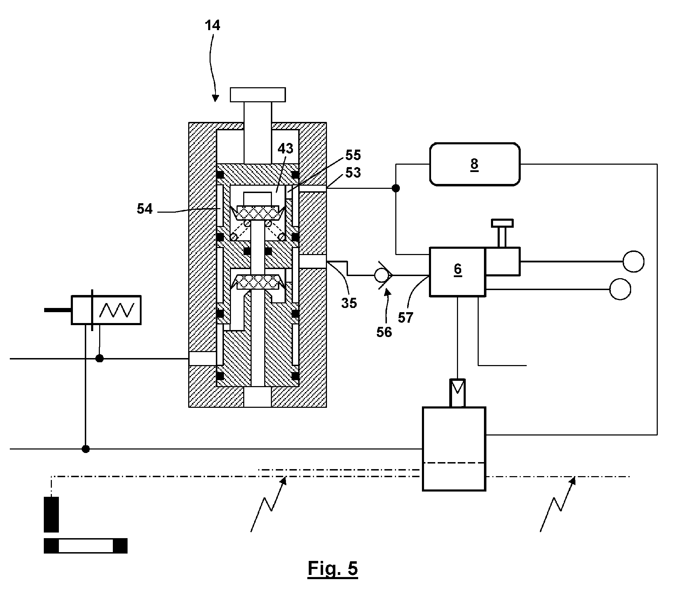

Fig. 5 zeigt eine im Wesentlichen Fig. 3 entsprechende Ausgestaltung des Parkventils 14. Allerdings erfolgt hier die Beaufschlagung des Steuerraums 43 nicht über den Versorgungsanschluss 35, sondern über einen zusätzlichen Steueranschluss 53. Dieser ist ständig über eine weitere Ringkammer 54 sowie einen Verbindungskanal 55 mit dem Steuerraum 43 verbunden. An den Steueranschluss 53 ist für das Ausführungsbeispiel gemäß Fig. 5 der Behälter 8 pneumatisch angebunden. Hingegen wird der Versorgungsanschluss 35 unter Zwischenschaltung eines in Richtung des Parkventils 14 öffnenden Rückschlagventils 56 mit dem Ausgangsanschluss 57 des Anhängerbremsventils 6 verbunden. Diese Ausgestaltung hat zur Folge, dass der Versorgungsanschluss 35 gegenüber Druckabfällen an dem Ausgangsanschluss 57 des Anhängerbremsventils 6 gesichert ist, während Schwankungen des Drucks in dem Behälter 8 sehr wohl dem Steueranschluss 53 zugeführt werden und über den Steuerkolben 44 die Kraftverhältnisse an dem Drucksicherungsventil 31 beeinflussen.

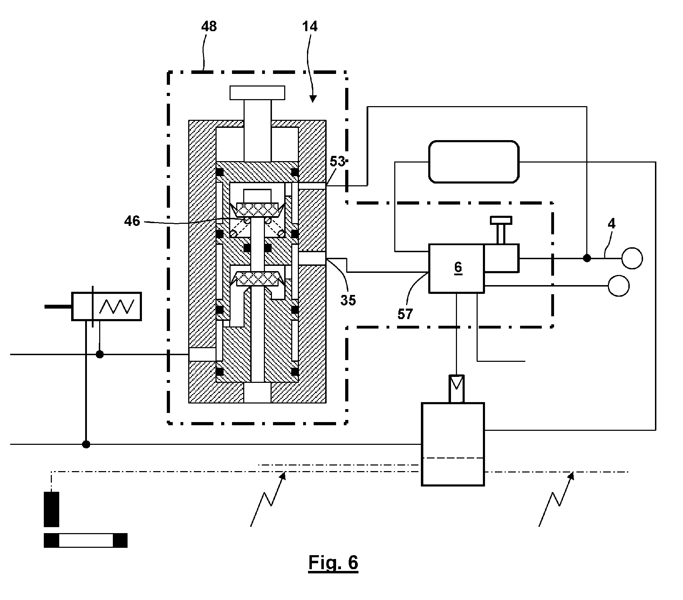

Möglich ist auch, dass der Stößel 47 fest an dem Ventilkörper 32 angebunden ist. Dies ist für das Ausführungsbeispiel gemäß Fig. 6 der Fall. Hier ist das dem Ausführungsbeispiel gemäß Fig. 5 entsprechende Parkventil 14 mit dem Steueranschluss 53 pneumatisch mit der Vorratsleitung 4 verbunden, während der Versorgungsanschluss 35 mit dem Ausgangsanschluss 57 des Anhängerbremsventils 6 verbunden ist. Sowohl in einer Notbremssituation als auch beim Abkoppeln des Anhängers wird die Vorratsleitung 4 und damit auch der Steueranschluss 53 drucklos, was zur Folge hat, dass bei geeigneter Dimensionierung der Druckfeder 46 die Druckfeder über den Stößel 47 den hieran angebundenen Ventilkörper 32 nach oben ziehen kann, womit eine Entlüftung der Lösekammer 15 erfolgen kann. Somit gewährleistet das Parkventil 14 gemäß Fig. 6 einen Notbremsfunktion über die Federspeicher-Feststellbremse 16 sowie die automatische Aktivierung der Federspeicher-Feststellbremse 16, wenn der Anhänger vom Zugfahrzeug abgekoppelt wird. Während des normalen Fahrbetriebs gewährleistet hingegen das Parkventil 14, dass der Lösedruck in der Lösekammer 15 der Federspeicher-Feststellbremse 16 auch bei Druckschwankungen im Behälter 8 bzw. Ausgangsanschluss 57 gesichert ist. Möglich ist, dass für das vorliegende Ausführungsbeispiel das Anhängerbremsventil 6 als einfaches Relaisventil ausgebildet ist zur Ansteuerung des EBS-Steuergeräts 10, wobei ergänzend das derart vereinfachte Anhängerbremsventil 6 den Druck in dem Behälter 8 an den Ausgangsanschluss 57 durchleitet.

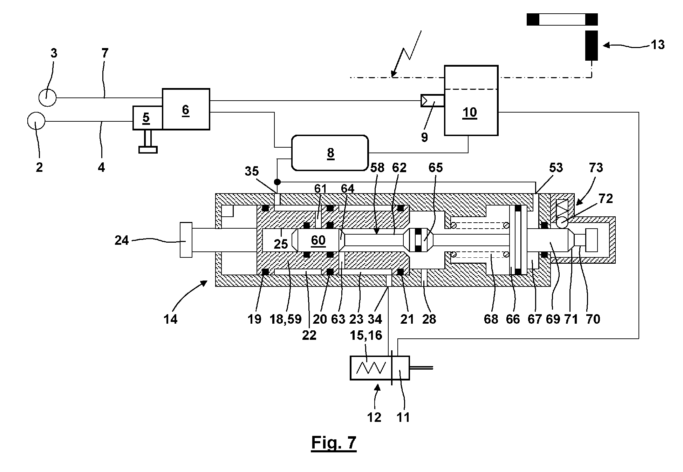

Fig. 7 zeigt eine alternative Ausgestaltungsform eines Parkventils 14. In diesem ist ebenfalls ein Ventilschieber 18 angeordnet, der Steuerkanten 19, 20, 21 mit dazwischen angeordneten Ringkammern 22, 23 bildet. Die Steuerkante 21 überführt ähnlich dem Ausführungsbeispiel gemäß Fig. 1 einen dem Ausgangsanschluss 34 zugeordneten Kanal, womit der Ausgangsanschluss 34 mit der Entlüftung 28 verbindbar ist. Für die Ausgestaltung gemäß Fig. 7 ist in der Längsbohrung 25 des Ventilschiebers 18 ein zweiter Ventilschieber 58 gleitend geführt, für welchen der Ventilschieber 18 ein Schiebergehäuse 59 bildet. In der in Fig. 7 wirksamen Stellung des Ventilschiebers 58 sperrt eine Verdickung 60 desselben einen in die Ringkammer 22 mündenden Verbindungskanal 61. Hingegen ist in der in Fig. 7 wirksamen Stellung über eine Einschnürung 62 des Ventilschiebers 58 eine Verbindung von der Ringkammer 23 und dem Verbindungskanal 63 zu der Entlüftung 28 geschaffen. Wird der Ventilschieber 58 aus der in Fig. 7 dargestellten Stellung nach links bewegt, passiert eine Steuerschräge 64 des Ventilschiebers 58 zwischen der Verdickung 60 und der Einschnürung 62 den Verbindungskanal 61 und gibt diesen frei. Gleichzeitig kommt eine weitere Verdickung 65 zur Wirkung, welche den Übertritt von Druckluft aus dem Ringraum 23 und der Einschnürung 62 zu der Entlüftung 28 absperrt. In der nach links geschobenen Endstellung des Ventilschiebers 58 ist eine pneumatische Verbindung zwischen dem Versorgungsanschluss 35, der Ringkammer 22, dem Verbindungskanal 61, der Ringkammer um die Einschnürung 62, dem Verbindungskanal 63, der Ringkammer 23 zu dem Ausgangsanschluss 34 geschaffen.

Eine Relativverschiebung zwischen dem Schiebergehäuse 59 und dem Ventilschieber 58 kann herbeigeführt werden, indem manuell durch Betätigung des Betätigungsorgans 24 das Schiebergehäuse 59 nach rechts aus der Stellung gemäß Fig. 7 verschoben wird (und entsprechend zurück). Möglich ist auch eine Betätigung über einen Steuerkolben 66, welcher mit dem Ventilschieber 58 gekoppelt ist und in einem Steuerraum 67 mit dem Druck, der an dem Steueranschluss 53 anliegt, beaufschlagt wird. Der Steuerkolben 66 kann unter Beaufschlagung einer Druckfeder 68 nach links verschoben werden. Auf der dem Ventilschieber 58 abgewandten Seite des Steuerkolbens 66 trägt dieser einen Zapfen 69, welcher eine umlaufende Nut 70 mit einer Schräge 71 besitzt. Zapfen 69, Nut 70 und Schräge 71 wirken zusammen mit einer über eine Feder radial nach innen beaufschlagten Rastkugel 72 oder einem anderweitigen Reib-, Rast- oder Sperrelement, womit eine Reib-, Rast- oder Sperreinrichtung 73 gebildet ist. Für eine Verschiebung des Ventilschiebers 58 gegenüber Fig. 7 nach links rastet die Rastkugel 72 in der Nut 70 ein. Eine Bewegung des Ventilschiebers 58 nach rechts zurück erfordert, dass an dem Ventilschieber 58, dem Steuerkolben 66 infolge der Druckfeder 68 Kräfte wirken, die ausreichend sind, um über die Schräge 71 die Rastkugel 72 entgegen der die Rastkugel 72 abstützenden Feder radial nach außen zu drücken. Die Reib-, Rast- oder Sperreinrichtung 73 bewirkt somit, dass der Ventilschieber 58 in einer Belüftungsstellung gefesselt ist. Für das in Fig. 7 dargestellte Ausführungsbeispiel sind sowohl der Versorgungsanschluss 35 als auch der Steueranschluss 53 von dem Druck des Behälters 8 beaufschlagt, wozu entsprechende parallele Leitungszweige vorgesehen sind.

Die Funktion des Parkventils 14 gemäß Fig. 7 ist wie folgt:

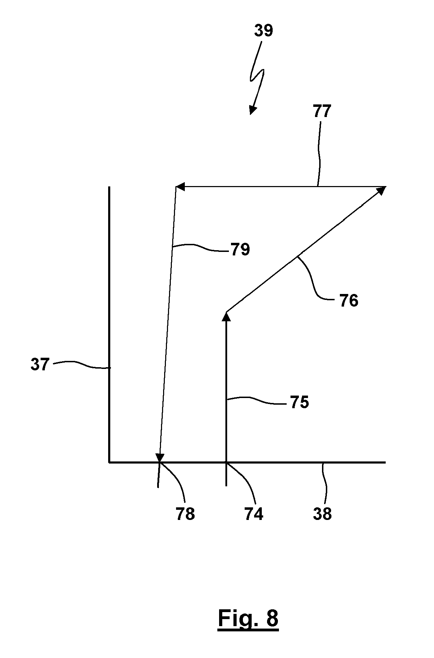

Mit Befüllen des Behälters 8 reicht zunächst der an dem Steueranschluss 53 anliegende Druck nicht aus, um den Steuerkolben 66 entgegen der Beaufschlagung durch die Feder 68 nach links zu verschieben. Dies ist erst möglich mit Erreichen eines Schwellenwerts 74 des Drucks in dem Behälter 8, vgl. **Fig. 8.** Reicht allerdings der Druck in dem Behälter 8 aus, um den Steuerkolben 66 mit dem Ventilschieber 58 nach links zu verschieben, wird der Übertritt von Druckluft von dem Versorgungsanschluss 35 über die Ringkammer 22 und den Verbindungskanal 61 über den Ringraum um die Einschnürung 62 zu dem Verbindungskanal 63 und die Ringkammer 53 zum Ausgangsanschluss 34 ermöglicht, womit schlagartig in dem Betriebsbereich 75 der Druck in der Lösekammer 15 ansteigt. Mit weiterer Erhöhung des Drucks in dem Behälter 8 schließt ein Betriebsbereich 76 an, in welchem der Druck an dem Ausgangsanschluss 34 proportional zum Druck an dem Versorgungsanschluss 35 ansteigt. Sinkt dann in einem Betriebsbereich 77 der Druck in dem Behälter 8 ab oder schwankt dieser, wird eine Bewegung des Ventilschiebers 58 nach rechts zunächst trotz der gegenüber der durch den Druck in dem Steuerraum 67 hervorgerufenen Kraft überwiegenden Kraft der Druckfeder 68 zunächst unterbunden durch die Fesslungswirkung der Reib-, Rast- oder Sperreinrichtung 73. Wird allerdings ein Schwellenwert 78 des Drucks in dem Behälter 8 erreicht, kann sich der Ventilschieber 58 nach rechts bewegen, womit eine Verbindung zwischen dem Ausgangsanschluss 34 und der Entlüftung 28 geschaffen wird, so dass in dem Betriebsbereich 79 die Lösekammer 15 entlüftet wird.

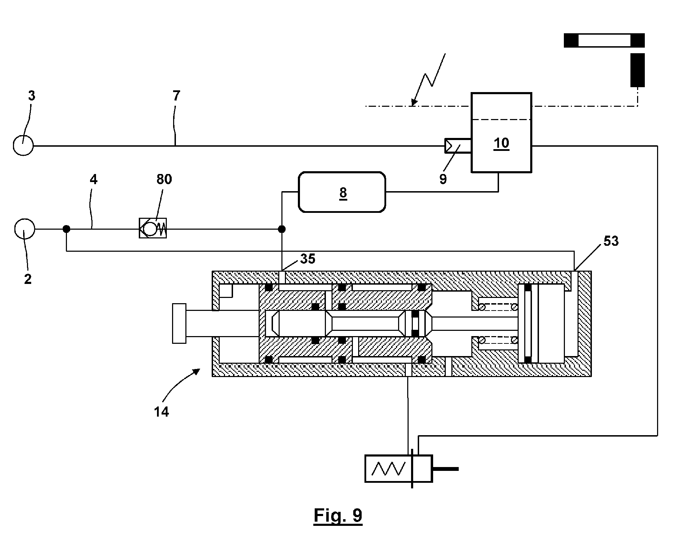

**Fig. 9** zeigt eine im Wesentlichen Fig. 7 entsprechende Ausführungsform, bei welcher allerdings der Versorgungsanschluss 35 mit dem Behälter 8 verbunden ist, während der Steueranschluss 53 mit der Vorratsleitung 4 verbunden ist. Für diese Ausführungsform sind das Anhängerbremsventil 6 und das Löseventil 5 vollständig entfallen. Stattdessen erfolgt hier eine Speisung des Behälters 8 unmittelbar aus der Vorratsleitung 4 unter Zwischenordnung eines in Richtung des Behälters 8 öffnenden Rückschlagventils 80. Der Behälter 8 versorgt unmittelbar das EBS-Steuergerät 10, dessen Steueranschluss 9 unmittelbar mit der Bremssteuerleitung 7 verbunden ist. Da gemäß Fig. 9 das Parkventil 14 bereits die Notbremsfunktion über die Federspeicher-Feststellbremse beinhaltet, ist hier der Einsatz eines Löseventils entbehrlich.

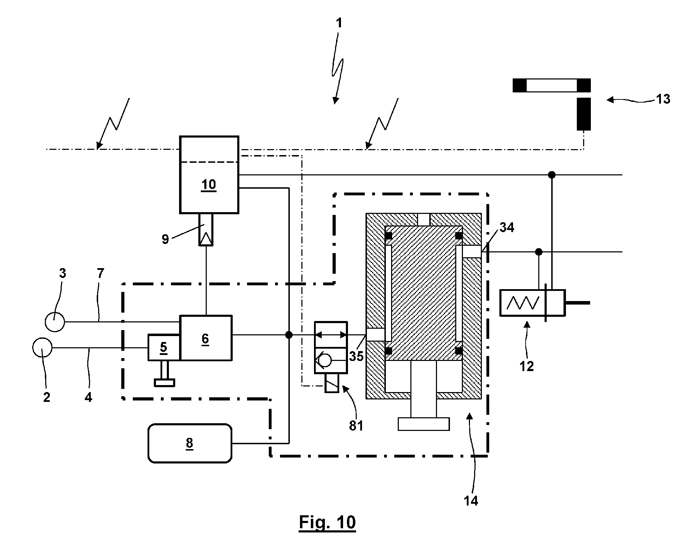

Schließlich zeigt **Fig. 10** ein Parkventil 14 in konventioneller Ausbildung, also als 3/2-Wegeventil. Allerdings ist für das Ausführungsbeispiel gemäß Fig. 10 zwischen Parkventil 14 und Anhängerbremsventil 6 ein Magnetventil 81 zwischengeordnet, welches als 2/2-Wegeventil ausgebildet ist. In der in Fig. 10 wirksamen Schaltstellung besitzt das Magnetventil 81 eine Durchlassstellung, während die andere Schaltstellung ein in Richtung in des Parkventils 14 öffnendes Rückschlagventil aktiviert. Die Ansteuerung des Magnetventils 81 erfolgt vorzugsweise über das EBS-Steuergerät 10. Grundsätzlich befindet sich das Magnetventil 81 in der Stellung mit wirksamen Rückschlagventil, so dass über dieses die Drucksicherung erfolgt. Erkennt die ECU des EBS-Steuergeräts 10, dass die Drucksicherungsfunktion durch das Rückschlagventil des Magnetventils 81 aufgehoben werden soll, wird über entsprechende elektrische Ansteuerung das Magnetventil 81 in die in Fig. 10 wirksame Schaltstellung umgesteuert. Es versteht sich, dass eine Steuerung des Magnetventils 81 in Fig. 10 durch eine beliebige anderweitige ECU des Anhängers und/oder des Zugfahrzeugs erfolgen kann. Die Ermittlung, ob die Drucksicherungsfunktion des Magnetventils 81 aufgehoben werden soll, kann in Abhängigkeit von der Geschwindigkeit v, des Drucks am Kupplungskopf o. ä. erfolgen.

Für die Gewährleistung der Drucksicherung kann anstelle der Überströmlippe 33 auch ein beliebiges, beispielsweise in einer Bohrung des Ventilkörpers 32 zwischen Druckraum 27 und Ringkammer 30 angeordnetes Rückschlagventil eingesetzt werden.

## BEZUGSZEICHENLISTE

| | |
|---|---|
| 1 | Anhängerbremsanlage |
| 2 | Kupplungskopf Vorrat |
| 3 | Kupplungskopf Bremse |
| 4 | Vorratsleitung |
| 5 | Löseventil |
| 6 | Anhängerbremsventil |
| 7 | Bremssteuerleitung |
| 8 | Behälter |
| 9 | Steueranschluss |
| 10 | EBS-Steuergerät |
| 11 | Betriebsbremskammer |
| 12 | Kombi-Bremszylinder |
| 13 | Raddrehzahlsensor |
| 14 | Parkventil |
| 15 | Lösekammern |
| 16 | Federspeicher-Feststellbremse |
| 17 | Gehäuse |
| 18 | Ventilschieber |
| 19 | Steuerkante |
| 20 | Steuerkante |
| 21 | Steuerkante |
| 22 | Ringkammer |
| 23 | Ringkammer |
| 24 | Betätigungsorgan |
| 25 | Längsbohrung |
| 26 | Ventilsitz |
| 27 | Druckraum |
| 28 | Entlüftung |
| 29 | Verbindungskanal |
| 30 | Ringkammer |
| 31 | Drucksicherungsventil |
| 32 | Ventilkörper |
| 33 | Überströmlippe |
| 34 | Ausgangsanschluss |
| 35 | Versorgungsanschluss |
| 36 | Verbindungskanal |
| 37 | Druck |
| 38 | Druck |
| 39 | Hystereseverlauf |
| 40 | Betriebsbereich |
| 41 | Betriebsbereich |
| 42 | Schwellenwert |
| 43 | Steuerraum |
| 44 | Steuerkolben |
| 45 | Verbindungskanal |

46 Druckfeder
47 Stößel
48 Baueinheit
49 Schwellenwert
50 Druckwert
51 Betriebsbereich
52 Betriebsbereich
53 Steueranschluss
54 Ringkammer
55 Verbindungskanal
56 Rückschlagventil
57 Ausgangsanschluss
58 Ventilschieber
59 Schiebergehäuse
60 Verdickung
61 Verbindungskanal
62 Einschnürung
63 Verbindungskanal
64 Steuerschräge
65 Verdickung
66 Steuerkolben
67 Steuerraum
68 Druckfeder
69 Zapfen
70 Nut
71 Schräge
72 Rastkugel
73 Reib-, Rast- oder Sperreinrichtung
74 Schwellenwert
75 Betriebsbereich
76 Betriebsbereich
77 Betriebsbereich
78 Schwellenwert
79 Betriebsbereich
80 Rückschlagventil
81 Magnetventil

**Patentansprüche**

1. Parkventil (14) für einen Nutzfahrzeug-Anhänger, mit

   a) einem Ausgangsanschluss (34) zur Druckluftbeaufschlagung einer Federspeicher-Feststellbremse (16),
   b) einem Versorgungsanschluss (35) zur Druckluftversorgung,
   c) einer Entlüftung (28) und
   d) einem manuellen Betätigungsorgan (24), über welches das Parkventil (14) manuell umschaltbar ist

      da) zwischen einer Belüftungsstellung, in der der Versorgungsanschluss (35) mit dem Ausgangsanschluss (34) verbunden ist, und
      db) einer Entlüftungsstellung, in der der Ausgangsanschluss (34) mit der Entlüftung (28) verbunden ist,

   **dadurch gekennzeichnet, dass**
   e) das Parkventil (14) ein Drucksicherungsventil (31) besitzt, welches in der Belüftungsstellung zwischen den Versorgungsanschluss (35) und den Ausgangsanschluss (34) zwischengeschaltet ist und in der Belüftungsstellung des Betätigungsorgans (24)

      ea) einen Druck an dem Ausgangsanschluss (34) gegenüber einem Druckabfall an dem Versorgungsanschluss (35) sichert, wobei

eb) die Wirkung des Drucksicherungsventils (31) aufgehoben ist, wenn

- der Druck an dem Versorgungsanschluss (35) oder
- die Druckdifferenz zwischen dem Druck am Versorgungsanschluss (35) und dem Druck am Ausgangsanschluss (34)

einen Schwellenwert (42) unterschreitet.

2. Parkventil (14) nach Anspruch 1, **dadurch gekennzeichnet, dass** das Drucksicherungsventil (31) mit einem Ventilkörper (32) ausgebildet ist, der auf einer Seite eine Fläche besitzt, die mit dem Druck des Versorgungsanschlusses (35) beaufschlagt ist, sowie auf der anderen Seite eine Fläche besitzt, die mit dem Druck des Ausgangsanschlusses (34) beaufschlagt ist.

3. Parkventil (14) nach Anspruch 2, **dadurch gekennzeichnet, dass** die Fläche, die mit dem Druck des Versorgungsanschlusses (35) beaufschlagt ist, größer ist als die Fläche, die mit dem Druck des Ausgangsanschlusses (34) beaufschlagt ist.

4. Parkventil (14) nach einem der vorhergehenden Ansprüche, **dadurch gekennzeichnet, dass** das Drucksicherungsventil (31) als Membranventil mit Überströmmanschette ausgebildet ist.

5. Parkventil (14) nach einem der vorhergehenden Ansprüche, **dadurch gekennzeichnet, dass** ein über einen Steueranschluss (53) druckbeaufschlagbarer Steuerraum (43) mit einem darin angeordneten Steuerkolben (44) vorgesehen ist, wobei der Steuerkolben (44) die Kraftverhältnisse an dem Drucksicherungsventil (31) beeinflusst.

6. Parkventil (14) nach Anspruch 5, **dadurch gekennzeichnet, dass** der Steueranschluss (53) und der Versorgungsanschluss (35) mit demselben Druck beaufschlagt sind oder baulich vereinigt sind.

7. Parkventil (14) nach Anspruch 5 oder 6, **dadurch gekennzeichnet, dass** der Steuerkolben (44) nur für einen Teilbetriebsbereich die Kraftverhältnisse an dem Drucksicherungsventil (31) beeinflusst.

8. Parkventil (14) nach einem der Ansprüche 5 bis 7, **dadurch gekennzeichnet, dass** als Versorgungsanschluss (35) ein Anschluss für ein Anhängerbremsventil (6), insbesondere mit zwischengeordnetem Rückschlagventil, und als Steueranschluss (53) ein Anschluss für einen Behälter (8) vorgesehen sind.

9. Parkventil (14) nach einem der Ansprüche 5 bis 7, **dadurch gekennzeichnet, dass** als Versorgungsanschluss (35) ein Anschluss für ein Anhängerbremsventil (6) oder einen Behälter (8) und als Steueranschluss (53) ein Anschluss für eine Vorratsleitung (4) vorgesehen sind.

10. Parkventil (14) nach einem der vorhergehenden Ansprüche, **dadurch gekennzeichnet, dass** das Drucksicherungsventil (31) mit einem Wiegekolben ausgebildet ist.

11. Parkventil (14) nach einem der Ansprüche 1 bis 9, **dadurch gekennzeichnet, dass**

a) das Drucksicherungsventil (31) mit einem Schieberventil gebildet ist, welches ein bewegbar in einem Gehäuse geführtes Schiebergehäuse (59) sowie einen bewegbar in dem Schiebergehäuse (59) geführten Ventilschieber (58) besitzt,
b) wobei das Schieberventil durch eine Relativbewegung des Schiebergehäuses (59) und des Ventilschiebers (58) in die Belüftungsstellung und die Entlüftungsstellung überführbar ist und
c) wobei die Relativbewegung des Schiebergehäuses (59) und des Ventilschiebers (58) sowohl manuell durch das Betätigungsorgan (24) als auch abhängig von den Druckverhältnissen an dem Versorgungsanschluss (35) und/oder dem Steueranschluss (53) verursacht werden kann.

12. Parkventil (14) nach Anspruch 11, **dadurch gekennzeichnet, dass** mindestens eine Stellung oder ein Stellungsbereich des Schiebergehäuses (59), des Ventilschiebers (58) und/oder des Schieberventils über ein Reib-, Rast- oder Sperreinrichtung (73) sicherbar ist.

13. Parkventil (14) nach mindestens einem der vorhergehenden Ansprüche, **dadurch gekennzeichnet, dass** in das Parkventil (14) eine Notbremsfunktion integriert ist.

**14.** Parkventil (14) nach einem der vorhergehenden Ansprüche, **dadurch gekennzeichnet, dass** mit Aufhebung der Wirkung des Drucksicherungsventils (31) bei Unterschreitung eines Schwellenwertes (42) durch den Druck an dem Versorgungsanschluss (35) oder die Druckdifferenz zwischen dem Druck am Versorgungsanschluss (35) und dem Druck am Ausgangsanschluss (34) das manuelle Betätigungsorgan (24) seine Belüftungsstellung beibehält.

## Claims

**1.** Parking valve (14) for a trailer of a utility vehicle with

a) an output port (34) for a bias of a spring-loaded parking brake (16) with pressurised air,
b) a supply port (35) for the supply of pressurised air,
c) a deaeration (28) and
d) a manual actuation means (24) by which it is possible to manually switch the parking valve (14)

da) between an aerating position in which the supply port (35) is connected to the output port (34) and
db) a deaerating position in which the output port (34) is connected to the deaeration (28),

**characterised by**
e) the parking valve (14) comprising a pressure protection valve (31) which in the aerating position is interposed between the supply port (35) and the output port (34) and in the aerating position of the actuation means (24)

ea) protects a pressure at the output port (34) against a pressure loss at the supply port (35), wherein
eb) the effect of the pressure protection valve (31) is cancelled if

- the pressure at the supply port (35) or
- the pressure difference between the pressure at the supply port (35) and the pressure at the output port (34)

falls below a threshold value (42).

**2.** Parking valve (14) of claim 1, wherein the pressure protection valve (31) comprises a valve body (32) which comprises a surface on one side which is biased by the pressure of the supply port (35) and which comprises a surface on the other side which is biased by the pressure of the output port (34).

**3.** Parking valve (14) of claim 2, wherein the surface which is biased with the pressure of the supply port (35) is larger than the surface which is biased by the pressure of the output port (34).

**4.** Parking valve (14) of one of claims 1 to 3, wherein the pressure protection valve (31) is a membrane valve with an overflow sleeve or cuff.

**5.** Parking valve (14) of one of claims 1 to 4, wherein a control chamber (43) which can be biased with pressure via a control port (53) is provided with a control piston (44) located therein, wherein the control piston (44) influences the force conditions at the pressure protection valve (31).

**6.** Parking valve (14) of claim 5, wherein the control port (53) and the supply port (35) are biased by the same pressure or are structurally combined.

**7.** Parking valve (14) of claim 5 or 6, wherein the control piston (44) only in a part of the operating region influences the force conditions at the pressure protection valve (31).

**8.** Parking valve (14) of one of claims 5 to 7, wherein as the supply port (35) a port of a trailer brake valve (6), in particular with an interposed check valve, and as the control port (53) a port for a reservoir (8) are provided.

**9.** Parking valve (14) of one of claims 5 to 7, wherein as the supply port (35) a port for a trailer brake valve (6) or a reservoir (8) and as the control port (53) a port for a supply line (4) are provided.

**10.** Parking valve (14) of one of claims 1 to 9, wherein the pressure protection valve (31) is built with a balancing piston.

**11.** Parking valve (14) of one of claims 1 to 9, wherein

a) the pressure protection valve (31) is built with a slide valve, which comprises a slide valve housing (59) which is guided for being movable in a housing, and which comprises a valve slider (58), which is guided for being movable in the slide valve housing (59),
b) wherein the slide valve is transferable by a relative movement between the slide valve housing (59) and the valve slider (58) into the aerating position and the deaerating position and
c) wherein the relative movement between the slide valve housing (59) and the valve slider (58) can be caused both manually by the actuation means (24) as well as dependent on the pressure conditions at the supply port (35) and/or the control port (53).

**12.** Parking valve (14) of claim 11, wherein at least one position or one region of positions of the slide valve housing (59), the valve slider (58) and/or the slide valve is securable by a frictional device, a latching device or locking device (73).

**13.** Parking valve (14) of at least one of the preceding claims, wherein an emergency brake function is integrated into the parking valve (14).

**14.** Parking valve (14) of one of the preceding claims, wherein with the cancellation of the effect of the pressure protection valve (31) with the falling of the pressure at the supply port (35) or with the falling of the pressure difference between the pressure at the supply port (35) and the pressure at the output port (34) below a threshold value (42), the manual actuation means (24) keeps its aerating position.

**Revendications**

**1.** Soupape de stationnement (14) pour une remorque de véhicule utilitaire, ayant

a) un raccordement de sortie (34) pour l'application d'air comprimé sur un frein de sécurité à ressort accumulateur (16),
b) un raccordement d'alimentation (35) pour l'alimentation en air comprimé,
c) une aération (28), et
d) un organe d'actionnement manuel (24) au moyen duquel la soupape de stationnement (14) peut être commutée manuellement

da) entre une position de ventilation dans laquelle le raccordement d'alimentation (35) est relié avec le raccordement de sortie (34) et
db) une position d'aération dans laquelle le raccordement de sortie (34) est relié avec l'aération (28),

**caractérisée**
e) **en ce que** la soupape de stationnement (14) possède une soupape de maintien de la pression (31) qui dans la position de ventilation, est intercalée entre le raccordement d'alimentation (35) et le raccordement de sortie (34), et dans la position de ventilation de l'organe d'actionnement (24)

ea) maintient une pression au niveau du raccordement de sortie (34) par rapport à une chute de pression au niveau du raccordement d'alimentation (35),
eb) l'action de la soupape de maintien de la pression (31) étant arrêtée lorsque

- la pression au niveau du raccordement d'alimentation (35) ou
- la différence de pression entre la pression au niveau du raccordement d'alimentation (35) et la pression au niveau du raccordement de sortie (34)

descend en dessous d'une valeur de seuil (42).

**2.** Soupape de stationnement (14) selon la revendication 1, **caractérisée en ce que** la soupape de maintien de la pression (31) est réalisée avec un corps de soupape (32) qui présente, sur un côté, une surface sur laquelle s'exerce la pression du raccordement d'alimentation (35), et sur l'autre côté, une surface sur laquelle s'exerce la pression du raccordement de sortie (34).

**3.** Soupape de stationnement (14) selon la revendication 2, **caractérisée en ce que** la surface sur laquelle s'exerce la pression du raccordement d'alimentation (35) est plus grande que la surface sur laquelle s'exerce la pression du raccordement de sortie (34).

**4.** Soupape de stationnement (14) selon l'une des revendications précédentes, **caractérisée en ce que** la soupape de maintien de la pression (31) est réalisée comme soupape à membrane avec un manchon de décharge.

**5.** Soupape de stationnement (14) selon l'une des revendications précédentes, **caractérisée en ce qu'**il est prévu un espace de commande (43) pouvant être soumis à une pression par le biais d'un raccordement de commande (53), dans lequel est agencé un piston de commande (44), le piston de commande (44) influençant les rapports de force au niveau de la soupape de maintien de la pression (31).

**6.** Soupape de stationnement (14) selon la revendication 5, **caractérisée en ce que** le raccordement de commande (53) et le raccordement d'alimentation (35) sont soumis à la même pression ou sont unis sur le plan de leur construction.

**7.** Soupape de stationnement (14) selon la revendication 5 ou 6, **caractérisée en ce que** le piston de commande (44) n'influence les rapports de force au niveau de la soupape de maintien de la pression (31) que dans une plage de fonctionnement partielle.

**8.** Soupape de stationnement (14) selon l'une des revendications 5 à 7, **caractérisée en ce qu'**il est prévu comme raccordement d'alimentation (35) un raccordement pour une soupape de frein de remorque (6), en particulier avec un clapet antiretour intercalé, et comme raccordement de commande (53) un raccordement pour un récipient (8).

**9.** Soupape de stationnement (14) selon l'une des revendications 5 à 7, **caractérisée en ce qu'**il est prévu comme raccordement d'alimentation (35) un raccordement pour une soupape de frein de remorque (6) ou un récipient (8) et comme raccordement de commande (53) un raccordement pour une conduite d'alimentation (4).

**10.** Soupape de stationnement (14) selon l'une des revendications précédentes, **caractérisée en ce que** la soupape de maintien de la pression (31) est réalisée avec un piston à fléau.

**11.** Soupape de stationnement (14) selon l'une des revendications 1 à 9, **caractérisée en ce que**

a) la soupape de maintien de la pression (31) est formée avec un distributeur à tiroir qui possède un corps de vanne (59) guidé de façon mobile dans un logement et un tiroir de soupape (58) guidé de façon mobile dans le corps de vanne (59),

b) le distributeur à tiroir pouvant être déplacé dans la position de ventilation et la position d'aération par un mouvement relatif du corps de vanne (59) et du tiroir de soupape (58), et

c) le mouvement relatif du corps de vanne (59) et du tiroir de soupape (58) peut être engendré aussi bien manuellement au moyen de l'organe d'actionnement (24) qu'en fonction des rapports de pression au niveau du raccordement d'alimentation (35) et/ou du raccordement de commande (53).

**12.** Soupape de stationnement (14) selon la revendication 11, **caractérisée en ce qu'**au moins une position ou une zone de positionnement du corps de vanne (59), du tiroir de soupape (58) et/ou du distributeur à tiroir peut être maintenue au moyen d'un dispositif à frottement, à encliquetage ou à verrouillage (73).

**13.** Soupape de stationnement (14) selon au moins l'une des revendications précédentes, **caractérisée en ce qu'**une fonction de freinage d'urgence est intégrée dans la soupape de stationnement (14).

**14.** Soupape de stationnement (14) selon l'une des revendications précédentes, **caractérisée en ce que** lorsque l'action de la soupape de maintien de la pression (31) est arrêtée parce que la pression au niveau du raccordement d'alimentation (35) ou la différence de pression entre la pression au niveau du raccordement d'alimentation (35) et la pression au niveau du raccordement de sortie (34) est descendue en dessous d'une valeur de seuil (42), l'organe d'actionnement manuel (24) conserve sa position de ventilation.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1188634 B1
- US 3837361 A
- EP 0792783 B1
- DE 102007053764
- DE 102005019479 B3
- EP 2121395 B1
- DE 1274903
- DE 102007053764 B4